# FASCICULE DE BREVET EUROPEEN

(11) **EP 1 510 710 B1**
(45) Date de publication et mention de la délivrance du brevet: **01.02.2006**
(21) Numéro de dépôt: 04292021.5
(22) Date de dépôt: 10.08.2004
(51) Int. Cl.: F16C 33/38, F16C 17/02, F16C 33/44

(54) **Palier radial à roulement**
Radial-Wälzlager
Radial rolling bearing

(30) Priorité: 27.08.2003 FR 0310220
(43) Date de publication de la demande: 02.03.2005
(73) Titulaire: DEFONTAINE, 85530 La Bruffière (FR)
(72) Inventeur: Chatry, Didier, 85530 La Bruffiere (FR); Terve, Daniel, 44230 St Sébastien S/ Loire (FR)
(74) Mandataire: Rémont, Claude

(56) Documents cités:
- EP-A- 0 531 082
- GB-A- 1 396 220
- US-A- 2 987 350
- US-A1- 2001 048 781
- PATENT ABSTRACTS OF JAPAN vol. 1998, no. 09, 31 juillet 1998 (1998-07-31) & JP 10 089365 A (NIPPON SEIKO KK), 7 avril 1998 (1998-04-07)

## Description

La présente invention concerne une couronne d'orientation, notamment un roulements à billes.

On connaît une couronne d'orientation du type comprenant des éléments roulants, deux bagues concentriques en métal ayant une certaine dureté, une intérieure et une extérieure, mobiles en rotation l'une par rapport à l'autre et formant un chemin de roulement pour les éléments roulants, et une cage en métal ayant une dureté sensiblement égale à celle des bagues, disposée entre ces dernières, solidaire en rotation avec les éléments roulants et maintenant ces derniers régulièrement espacés les uns des autres dans le chemin de roulement.

Un inconvénient majeur d'une telle couronne est que, pendant le mouvement de rotation, la cage vient en contact avec les bagues et s'use à cause des frottements ainsi générés. Cette usure entraîne, d'une part, une pollution du lubrifiant qui voit ainsi ses propriétés diminuées, et, d'autre part, un diminution de la durée de vie des couronnes.

De ce fait des solutions ont été proposées : traiter thermiquement et/ou chimiquement la surface des bagues au niveau de contact avec la cage (par exemple US 2001/48781 ou EP 0 531 082), le chemin de roulement ne devant pas subir ce traitement de surface, cette solution est délicate à mettre en oeuvre surtout pour les couronnes de grand diamètre, ou munir la cage d'éléments poreux contenant un lubrifiant (par exemple GB 1 396 220 et JP 10 089 365), ce qui complique énormément la fabrication de la cage.

Le problème posé est de réaliser une couronne d'orientation dans laquelle la pollution du lubrifiant est fortement diminuée et dont la durée de vie est considérablement augmentée.

La solution à ce problème est une couronne du type précité comprenant au moins un anneau de contact circulaire qui est réalisé en un matériau ayant une dureté différente de celle des bagues et de la cage, qui est logé dans une gorge réalisée dans l'une des deux bagues, contre lequel la cage vient en contact et qui empêche tout contact direct entre la cage et la bague dans laquelle est réalisée la gorge.

Ainsi, l'utilisation d'anneau de contact conforme à la présente invention permet de réaliser facilement et économiquement des couronnes dont l'usure des éléments constitutifs est considérablement réduite (voire supprimée). De ce fait, il n'y a plus de particules métalliques qui polluent le lubrifiant (qui de ce fait garde ses propriétés plus longtemps). On augmente ainsi la durée des intervalles de graissage de la couronne et on diminue (voire supprime) le risque de rupture de la cage. En outre, le bruit généré par la couronne d'orientation est fortement diminué. Et ceci même pour des couronnes d'orientation de grand diamètre (au moins 1m de diamètre).

D'autres particularités et avantages apparaîtront dans la description détaillée qui va suivre d'un mode de réalisation particulier et illustré par les dessins mis en annexe.

La figure unique représente une vue partielle en coupe axiale d'une couronne d'orientation conforme à la présente invention.

Comme on peut le voir à la figure, de façon connue, une couronne d'orientation 1 comprend :
- des éléments roulants 2 (en l'occurrence, des billes 2),
- deux bagues 3,4 concentriques (une intérieure 3 et une extérieure 4), en acier, mobiles en rotation l'une par rapport à l'autre et formant un chemin de roulement 5 pour les billes 2, et
- une cage 6 en acier disposée entre les deux bagues 3,4, s'étendant, selon la direction axiale de la couronne d'orientation 1, de part et d'autre des billes 2, solidaire en rotation de celles-ci, et les maintenant régulièrement espacées les unes des autres dans le chemin de roulement 5.

En outre, la couronne d'orientation 1 comprend des éléments de contact 7a,7b,7c,7d réalisés en un matériau non ferreux, en l'occurrence un polyamide, par exemple en polyamide-6,6.

Chaque élément de contact 7a,7b,7c,7d est disposé entre deux organes formés par la cage 6 et l'une des deux bagues 3,4, empêche tout contact direct entre ces deux organes 3,4,6, est fixé à l'un de ces deux organes 3,4,6, et vient en contact avec l'autre.

En l'occurrence, la couronne d'orientation 1 comprend quatre éléments de contact 7a,7b,7c,7d :
- deux 7a,7b sont disposés entre la cage 6 et la bague extérieure 4, empêchent tout contact direct entre ces deux organes 4,6, sont fixés à la bague extérieure 4, et viennent en contact avec la cage 6 ; et
- deux 7c,7d sont disposés entre la cage 6 et la bague intérieure 3, empêchent tout contact direct entre ces deux organes 3,6, sont fixés à la bague intérieure 3, et viennent en contact avec la cage 6 ;

Comme on peut le voir, les éléments de contact 7a,7b fixés à la couronne extérieure 4 sont disposés, selon la direction axiale, de part et d'autre du chemin de roulement 5, comme le sont les éléments de contact 7c,7d fixés à la couronne intérieure 3.

Cette répartition sensiblement symétrique des quatre éléments de contact 7a,7b,7c,7d par rapport au chemin de roulement 5 permet d'équilibrer parfaitement la couronne d'orientation 1 et de n'avoir absolument pas de point de contact entre la cage 6 et l'une et l'autre des deux bagues 3,4. Cette configuration particulière est particulièrement intéressante dans les couronnes d'orientation 1 dont les éléments de roulements 2 décrivent un cercle de grand diamètre (par exemple au moins 1 m, voire 1,5 m ou plus), et surtout dans les couronnes utilisées pour orienter des dispositifs soumis à de fortes pressions, comme les couronnes d'orientation (1) utilisées pour orienter, en fonction de la force du vent, des pales par rapport à un rotor d'une nacelle d'éolienne.

Dans le présent exemple, les éléments de contact 7a,7b,7c,7d sont des anneaux circulaires qui sont insérés de force dans des gorges 8 correspondantes réalisées dans les bagues 3,4. Comme on peut le voir à la figure, la section droite de ces anneaux peut être trapézoïdale, rectangulaire ou semi-circulaire. Les anneaux circulaires sont faits en une matière compacte, c'est-à-dire non poreuse. De préférence, l'anneau n'est fait que d'une seule pièce.

Par ailleurs, de façon classique, la couronne 1 comprend également des joints d'étanchéité afin de retenir le lubrifiant dans le logement défini par les deux bagues 3,4 et dans lequel sont enfermées les billes 2 et la cage 6.

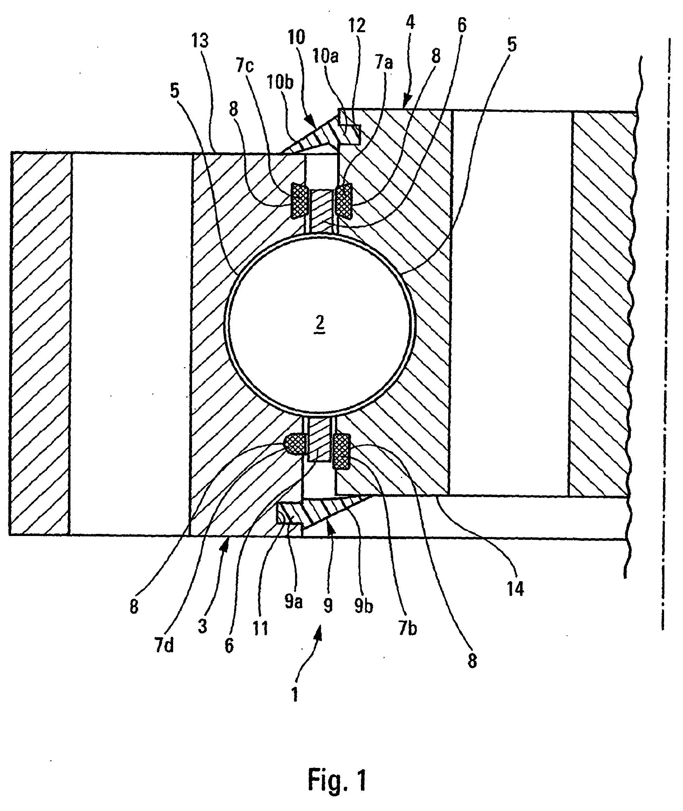

La couronne 1 peut ainsi comporter notamment des joints à lèvre, schématisés en 9, 10 à la figure 1, comprenant chacun une base 9a, 10a introduite dans une encoche correspondante 11, 12 de la bague respective 3, 4, et une lèvre 9b, 10b, s'appuyant sur une surface transversale 14, 13, correspondante de l'autre bague 4, 3.

Il serait ainsi possible d'avoir des éléments de contact uniquement entre la bague intérieure et la cage ou entre la bague extérieure et la cage, bien que cela rendrait beaucoup moins efficace la présente invention.

Il serait aussi possible que les éléments de contact soient en tout autre matériau polymère autre que du polyamide, par exemple en polytétrafluoroéthylène ou en polyimide. Ces éléments de contact pourraient aussi être en un métal non ferreux, par exemple en alliage de cuivre ou en bronze.

Il serait aussi possible d'utiliser d'autres moyens de fixation des éléments de contact, selon la matière les constituants : ils peuvent être fixés chimiquement (par exemple collés), métallurgiquement (par exemple soudés ou brasés) ou mécaniquement (par exemple clipsés ou boulonnés).

Il serait aussi possible d'utiliser des éléments roulants autres que des billes, par exemple des galets.

## Revendications

1. Couronne d'orientation (1) comprenant des éléments roulants (2), deux bagues (3,4) concentriques en métal ayant une certaine dureté, une intérieure (3) et une extérieure (4), mobiles en rotation l'une par rapport à l'autre et formant un chemin de roulement (5) pour les éléments roulants (2), et une cage (6) en métal ayant une certaine dureté sensiblement égale à la dureté des bagues (3,4), disposée entre les deux bagues (3, 4), solidaire en rotation avec les éléments roulants (2), et maintenant ces derniers régulièrement espacés les uns des autres dans le chemin de roulement (5), **caractérisée en ce qu'**elle comprend au moins un anneau de contact (7a,7b,7c,7d) circulaire, réalisé en un matériau ayant une dureté différente de celle des bagues (3,4) et de la cage (6), logé dans une gorge (8) réalisée dans l'une des deux bagues (3,4), contre lequel la cage (6) vient en contact, et empêchant tout contact direct entre la cage (6) et la bague (3, 4) dans laquelle est réalisée la gorge (8).

2. Couronne d'orientation (1) selon la revendication 1, **caractérisée en ce que** les bagues (3,4) et la cage (6) sont en acier et **en ce que** les anneaux de contact (7a,7b,7c,7d) sont en un matériau non ferreux.

3. Couronne d'orientation (1) selon la revendication 1 ou 2, **caractérisée en ce que** la bague intérieure (3) et la bague extérieure (4) comprennent, chacune, au moins une gorge (8) dans laquelle est logé un anneau de contact (7a, 7b, 7c, 7d).

4. Couronne d'orientation (1) selon l'une des revendications 1 à 3, **caractérisée en ce qu'**une même bague (3;4), comprend de part et d'autre du chemin de roulement (5), au moins une gorge (8) dans laquelle est logé un anneau de contact (7a, 7b, 7c, 7d).

5. Couronne d'orientation (1) selon l'une des revendications 1 à 4, **caractérisée en ce que** l'anneau de contact (7a,7b,7c,7d) a une section droite trapézoïdale, rectangulaire ou semi-circulaire.

6. Couronne d'orientation selon l'une des revendications 1 à 5, **caractérisé en ce que** chaque anneau de contact (7a, 7b, 7c, 7d) est fait en une matière compacte, non poreuse.

7. Couronne d'orientation (1) selon l'une des revendications 1 à 6, **caractérisée en ce que** chaque anneau de contact (7a,7b,7c,7d) est fait en un métal non ferreux, par exemple en alliage de cuivre ou en bronze.

8. Couronne d'orientation (1) selon l'une des revendications 1 à 6, **caractérisée en ce que** chaque anneau de contact (7a,7b,7c,7d) est fait en polymère, par exemple en polyamide ou en polytétrafluoroéthylène.

9. Couronne d'orientation (1) selon l'une des revendications 1 à 8, **caractérisée en ce que** l'anneau de contact (7a,7b,7c) est fixé à la bague correspondante (3,4) mécaniquement, métallurgiquement ou chimiquement.

10. Couronne d'orientation (1) selon l'une des revendications 1 à 9, **caractérisée en ce que** les éléments roulants (2) sont des billes (2).

## Claims

1. Slewing ring (1) comprising rolling elements (2), two concentric races (3, 4), one inner (3) and one outer (4), made of metal having a certain hardness, these races being able to move rotationally with respect to one another and forming a raceway (5) for the rolling elements (2), and a cage (6) made of metal having a certain hardness which is substantially equal to the hardness of the races (3, 4), this cage being arranged between the two races (3, 4), being locked in rotation with the rolling elements (2) and keeping these elements regularly spaced apart in the raceway (5), **characterized in that** the slewing ring comprises at least one circular contact ring (7a, 7b, 7c, 7d) made of a material having a hardness which differs from that of the races (3, 4) and that of the cage (6), the contact ring being housed in a groove (8) formed in one of the two races (3, 4), the cage (6) coming into contact against the contact ring, and the contact ring preventing any direct contact between the cage (6) and the race (3, 4) in which the groove (8) is formed.

2. Slewing ring (1) according to Claim 1, **characterized in that** the races (3, 4) and the cage (6) are made of steel and **in that** the contact rings (7a, 7b, 7c, 7d) are made of a non-ferrous material.

3. Slewing ring (1) according to Claim 1 or 2, **characterized in that** the inner race (3) and the outer race (4) each comprise at least one groove (8) in which a contact ring (7a, 7b, 7c, 7d) is housed.

4. Slewing ring (1) according to one of Claims 1 to 3, **characterized in that** one and the same race (3; 4) comprises, on either side of the raceway (5), at least one groove (8) in which a contact ring (7a, 7b, 7c, 7d) is housed.

5. Slewing ring (1) according to one of Claims 1 to 4, **characterized in that** the contact ring (7a, 7b, 7c, 7d) has a trapezoidal, rectangular or semicircular cross section.

6. Slewing ring according to one of Claims 1 to 5, **characterized in that** each contact ring (7a, 7b, 7c, 7d) is made of a compact, non-porous material.

7. Slewing ring (1) according to one of Claims 1 to 6, **characterized in that** each contact ring (7a, 7b, 7c, 7d) is made of a non-ferrous metal, for example a copper or bronze alloy.

8. Slewing ring (1) according to one of Claims. 1 to 6, **characterized in that** each contact ring (7a, 7b, 7c, 7d) is made of a polymer, for example polyamide or polytetrafluoroethylene.

9. Slewing ring (1) according to one of Claims 1 to 8, **characterized in that** the contact ring (7a, 7b, 7c, 7d) is fastened to the corresponding race (3, 4) mechanically, metallurgically or chemically.

10. Slewing ring (1) according to one of Claims 1 to 9, **characterized in that** the rolling elements (2) are balls (2).

## Patentansprüche

1. Drehkranz (1), umfassend Rollelemente (2), zwei konzentrische Ringe (3, 4), einen inneren (3) und einen äußeren (4), aus Metall, welches eine bestimmte Härte aufweist, die beweglich bei Drehung des einen um den anderen sind und eine Laufbahn (5) für die Rollelemente (2) bilden, und ein Behältnis (6) aus Metall, das eine bestimmte Härte aufweist, die im Wesentlichen gleich zu der Härte der Ringe (3, 4) ist, welches zwischen den zwei Ringen (3, 4) angeordnet ist, wobei es bei Drehung mit den Rollelementen (2) fest verbunden ist und letztere auf der Laufbahn (5) regelmäßig voneinander beabstandet hält, **dadurch gekennzeichnet, dass** er mindestens einen kreisförmigen Kontaktring (7a, 7b, 7c, 7d) umfasst, der aus einem Material gefertigt ist, welches eine unterschiedliche Härte von jener der Ringe (3, 4) und des Behältnisses (6) aufweist, welcher in einer Vertiefung (8) aufgenommen ist, die in einem der zwei Ringe (3, 4) ausgeformt ist, gegen welchen das Behältnis (6) in Kontakt tritt und jeden direkten Kontakt zwischen dem Behältnis (6) und dem Ring (3, 4), in welchem die Vertiefung (8) ausgeformt ist, verhindert.

2. Drehkranz (1) gemäß Anspruch 1, **dadurch gekennzeichnet, dass** die Ringe (3, 4) und das Behältnis (6) aus Stahl bestehen und dass die Kontaktringe (7a, 7b, 7c, 7d) aus einem nicht eisenhaltigen Material bestehen.

3. Drehkranz (1) gemäß Anspruch 1 oder 2, **dadurch gekennzeichnet, dass** der innere Ring (3) und der äußere Ring (4) jeder mindestens eine Vertiefung (8) umfassen, in welcher ein Kontaktring (7a, 7b, 7c, 7d) aufgenommen ist.

4. Drehkranz (1) gemäß einem der Ansprüche 1 bis 3, **dadurch gekennzeichnet, dass** ein gleicher Ring (3; 4) von beiden Seiten der Laufbahn (5) mindestens eine Vertiefung (8) umfasst, in welcher ein Kontaktring (7a, 7b, 7c, 7d) aufgenommen ist.

5. Drehkranz (1) gemäß einem der Ansprüche 1 bis 4, **dadurch gekennzeichnet, dass** der Kontaktring (7a, 7b, 7c, 7d) einen trapezförmig geraden, rechtwinkeligen oder halbkreisförmigen Abschnitt aufweist.

6. Drehkranz (1) gemäß einem der Ansprüche 1 bis 5, **dadurch gekennzeichnet, dass** jeder Kontaktring (7a, 7b, 7c, 7d) aus einem kompakten, nicht porösen Material gefertigt ist.

7. Drehkranz (1) gemäß einem der Ansprüche 1 bis 6, **dadurch gekennzeichnet, dass** jeder Kontaktring (7a, 7b, 7c, 7d) aus einem nicht eisenhältigen Material gefertigt ist, beispielsweise aus einer Kupferlegierung oder aus Bronze.

8. Drehkranz (1) gemäß einem der Ansprüche 1 bis 6, **dadurch gekennzeichnet, dass** jeder Kontaktring (7a, 7b, 7c, 7d) aus einem Polymer gefertigt ist, beispielsweise aus Polyamid oder aus Polytetrafluorethylen.

9. Drehkranz (1) gemäß einem der Ansprüche 1 bis 8, **dadurch gekennzeichnet, dass** der Kontaktring (7a, 7b, 7c) an dem entsprechenden Ring (3, 4) mechanisch, metallurgisch oder chemisch befestigt ist.

10. Drehkranz (1) gemäß einem der Ansprüche 1 bis 9, **dadurch gekennzeichnet, dass** die Rollelemente (2) Kugeln sind (2).
